(19) **Europäisches Patentamt**

**European Patent Office**

**Office européen des brevets**

(11) **EP 1 596 576 A2**

(12) **EUROPEAN PATENT APPLICATION**

(43) Date of publication:
**16.11.2005 Bulletin 2005/46**

(51) Int Cl.⁷: **H04N 1/60**

(21) Application number: **05103743.0**

(22) Date of filing: **04.05.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (71) Applicant: **AGFA-GEVAERT**<br>**2640 Mortsel (BE)** |
| (30) Priority: **06.05.2004 EP 04101964**<br>**21.10.2004 EP 04105230** | (72) Inventors:<br>• **Mahy, Marc AGFA-GEVAERT**<br>  **2640 Mortsel (BE)**<br>• **Vande Velde, Koen AGFA-GEVAERT**<br>  **2640 Mortsel (BE)** |

(54) **Method for closed loop characterization**

(57)     A method for modifying a transformation from a first space to a second device dependent colorant space of a second color reproduction device, wherein the first space is selected from the group of a first device dependent colorant space of a first color reproduction device and a first device independent color space, the method including (a) selecting a first point in the first space; (b) applying the transformation to the first point, thus obtaining a target value in the second device dependent colorant space; and (c) correcting the target value, thus modifying the transformation, wherein the correction of the target value is based on a measured value of a color patch, reproduced on the second color reproduction device for a second point in the second device dependent colorant space, wherein the second point is (i) a point around the target value and different from the target value, or (ii) the target value.

FIG. 4

600

**Description**

FIELD OF THE INVENTION

The present invention relates to the field of color management, and in particular to transformations from a colorant or a color space to another one.

BACKGROUND OF THE INVENTION AND TERMINOLOGY

Today, more and more output systems are developed for the reproduction of color images. Several display and printing technologies are used such as CRT's, LCD's, conventional photography, electrophotography, thermal transfer, dye sublimation and inkjet systems to name a few. In the rest of this document, these systems will be referred to as output devices.

All these systems can be described as multi-dimensional output devices with n colorants such as CMYK (cyan, magenta, yellow and black) inks of an inkjet system or RGB (Red, Green, Blue) in case of a display system. In this document it is assumed that the colorant values for printers range from 0% (no colorant laid down on paper) to 100% (maximum amount of colorant laid down on paper). For display systems, the values range from 0 to 255. In the rest of this document, mainly a printer will be used as an example of an output system, however, it is well known in the art of color management systems that all aspects of printers can be easily extended to those of a display systems.

With colorant space is meant an n-dimensional space with n the number of independent variables with which the output device can be addressed. In the case of an offset printing press the dimension of the colorant space corresponds to the number of inks of the printer. As normally CMYK inks are used, the dimension of the colorant space is four. Colorant spaces are also referred to as device dependent spaces.

The colorant gamut is defined by all possible combinations of colorant values, ranging from 0% to 100% for printers and from 0 to 255 for display systems. If there are no colorant limitations, the colorant gamut is a n-dimensional cube.

With color space is meant a space that represents a number of quantities of an object that characterize its color. In most practical situations, colors will be represented in a 3-dimensional space such as the CIE XYZ space. However, also other characteristics can be used such as multi-spectral values based on filters that are not necessarily based on a linear transformation of the color matching functions. The values represented in a color space are referred to as color values. Color spaces are also referred to as device independent spaces.

A printer model is a mathematical relation that expresses color values in function of colorants for a given output system. The variables for the colorants are denoted as $c_1,c_2,...,c_n$ with n the dimension of the colorant space. An n-ink process is completely characterized by its colorant gamut with a number of colorant limitations and the printer model. Because of this close relationship between an n-ink process and the printer model, the operations typically defined for a printer model are easily extended to an n-ink process.

The printer model is often based on a printer target. Such a target consists of a number of uniform color patches, defined in the colorant space of the printing device. In a next step the printer target is printed and measured, and based on the values of the patches in colorant space and the measured color values, the printer model is made. A printer target is normally characterized by the sampling points along the different colorant axes. Based on the sampling points a regular grid can be constructed in colorant space of which a number of grid points are contained by the printer target. Hence a target can be said to be complete or incomplete. (see **EP-A-1 146 726** for regular grids and for complete and incomplete printer targets).

With inverting an n-ink process is meant that the corresponding printer model is inverted. In this way, a so-called characterization transformation is obtained, that transforms colors from color space to the colorant space of the concerned printer. For more information on characterization, calibration and other relevant terms in color management, we refer to patent application E**P-A-1 083 739**. As opposed to the characterization transformation, the transformation of an n-ink process to color space is equivalent to the transformation of the corresponding colorant domain to color space by making use of the printer model.

In graphic arts, it is common to simulate a job to be printed on an output device. This simulation process is called proofing and the print is referred to as the proof.

There may be several reasons to make a proof, such as:

- if prints have to be made in a rather large number of copies, in most cases printing systems are selected that result in a low cost per copy. However, the disadvantage of most of these systems is that the setup costs are rather high. To check the setup, a proof can be created based on the workflow just before the printing system;
- to check the design;
- to check the layout of a page, e.g. to check if all page elements are present;

- to check moiré effects;
- to check the color.

As there are many reasons to make a proof, the required quality of the proof may depend on the circumstances; e.g. if the layout of a proof has to be checked, the color accuracy is less important.

Making a proof may involve a transformation from a colorant or a color space to another one.

Patent **US-A-6 027 201** discloses an apparatus and method for recalibrating a multi-color imaging system, that includes a transformation from a colorant or a color space to another one.

There is still a need for an improved method for making such a transformation.

SUMMARY OF THE INVENTION

The present invention is a method for modifying a transformation as claimed in independent claim 1. Preferred embodiments of the invention are set out in the dependent claims. Preferably, a method in accordance with the invention is implemented by a computer program as claimed in claim 5. The invention also includes a computer readable medium comprising program code adapted to carry out such a method, and a system comprising means for carrying out the steps of such a method.

The invention is related to a technique that is called closed loop characterization in this document. The closed loop characterization may be applied for dot for dot proofing. It may also be applied to modify a transformation from a color or colorant space to a device dependent colorant space. Either a single step of the closed loop characterization technique may be applied, or the technique may be applied iteratively.

BRIEF DESCRIPTION OF THE DRAWINGS

The invention is described with reference to the following drawings without the intention to limit the invention thereto, and in which:

Fig. 1 diagrammatically shows an embodiment for making a dot for dot proof;
Fig. 2A to 2D show CMYK proofer values for CMYK 1-ink processes of a press for a specific embodiment;
Fig. 3 shows an ED mode, a dot4dot mode and a closed loop characterization flow;
Fig. 4 shows another closed loop characterization flow.

DETAILED DESCRIPTION OF THE INVENTION

In this document, the output device will be called the press, while the color reproduction device on which the proof is made will be referred to as the proofer. Hereinafter, mainly embodiments will be discussed wherein the proofer is an inkjet printer. The invention is however not restricted to embodiments wherein the output device is a press, such as an offset press, or wherein the proofer is an inkjet printing device. The invention may also be applied to other combinations of output devices and color reproduction devices. A specific embodiment is the one wherein the output device is a computer display.

If accurate color proofs are required, which are also referred to as contract proofs, a very close match between proof and print is required.

In contract proofing on inkjet systems, there are two main modes. These two main modes are called in this document ED mode and dot4dot mode.

- ED mode: this stands for Error Diffusion mode. Error diffusion is a well established halftoning method; we refer to patent **US 5 975 671** for more information on error diffusion. Error diffusion is especially suitable for printers that are able to produce dispersed dots, such as inkjet printers. However, as will become clear from the disclosure hereinafter, instead of error diffusion, another halftoning method, or another rendering method, may also be applied.

    In the ED mode the proof matches the print; i.e. the colors of objects in the proof and the print are the same. Such a proof is called an ED proof in the present document. As opposed to dot4dot mode, in ED mode no artifacts such as moiré are simulated, as will now be discussed.

- Dot4dot mode: this stands for dot for dot mode. As most printing systems are binary devices, customarily screening techniques are used to render colors, in order to create smooth color gradations. The number of colors that can be printed on a microscopic scale is $2^n$, with n the number of colorants (remark: in "$2^n$", the "^" represents the power-operator: e.g. "$2^4$" means "two, raised to the fourth power", i.e. sixteen). Originally, there were two types of screens, AM screens and FM screens. In the meantime, also hybrid screens have been developed, which are a combination of AM and FM screens, over the tone scale. Due to the interaction of the screens of the different colorants of the printing system, typical patterns are created. In general, the desired patterns are called rosettes (they typically occur in AM screening); undesired patterns however are called moiré. For some images, there is also an interaction between the screen and the image, resulting in very disturbing object moiré. In ED mode, none of these patterns, rosettes or moiré effects, are simulated. In the dot4dot mode, however, moiré and rosettes are simulated as well as possible according to the resolution of the proofer. Such a proof, wherein one or more of these effects are simulated, is referred to as a dot proof or dot for dot proof, and is also called a "dot4dot proof" in this document. For more information on dot for dot proofing and related issues we refer to patent application **EP-A-1 139 654**.

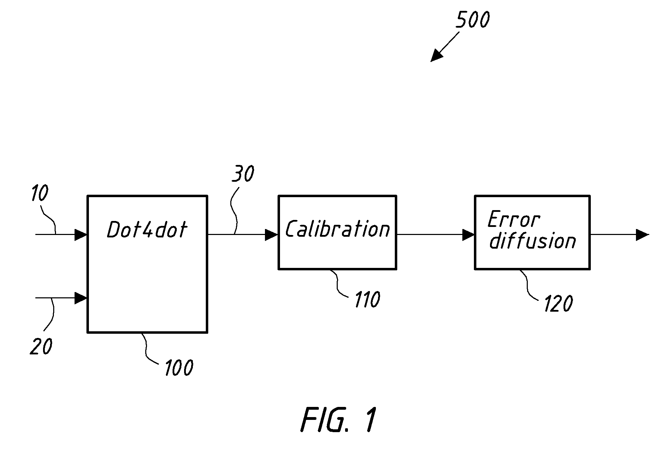

Fig. 1 shows a preferred embodiment of a workflow 500 for a dot4dot proof. Per pixel, there are two types of input data for the dot4dot block 100:

- Binary or pseudo-binary data 10 : these are 1 bit (i.e. binary) screened data, suitable for the press, and obtained from the original contone data for the press before screening; to obtain these screened data, e.g. filtering may have been applied in order to reduce patterns, or a resolution conversion may have been performed; in scuh a case the obtained data are called pseudo-binary data in this document. These binary or pseudo-binary data are a representation of the color on a microscopic scale.
- Contone data 20 : these are the original press data before screening. They are a representation of the color in the neighborhood of the pixel, i.e. they represent the color on a macroscopic scale.

The occurrence of a microscopic and macroscopic scale can be illustrated as follows:

- Suppose the input image is a continuous tone image at 200 dpi (dpi stands for dots per inch). To screen the image, the image is rescaled to 2400 dpi. For proofing, the resolution has to be converted to the resolution of the proofer, suppose 720 dpi. In this example, the 200 dpi resolution can be seen as the macroscopic scale. The resolution between 720 and 2400 dpi on the other hand is the microscopic scale. In most implementations, the microscopic resolution corresponds to the resolution of the proofer.
- From a visual point of view, the macroscopic scale corresponds to an object that is smaller than or equal to the smallest visible object with the human visual system, seen at a normal viewing distance between 10 and 30 cm. The microscopic scale on the other hand is a scale that in general is significantly lower than the macroscopic scale.

Preferably both binary or pseudo-binary data and contone data are given at the same resolution, in the colorant space of the press system. The resolution may correspond to the resolution of the press, to the resolution of the proofer, or to an intermediate resolution, typically between the press resolution and the proofer resolution.

In Fig. 1, the output 30 of the dot4dot block 100 corresponds to colorant values that are to be sent to the proofer. Generally, the output data 30 pass a calibration step 110, and a rendering step, usually by error diffusion 120; a resolution conversion from the output resolution of the dot4dot block 100 to the proofer resolution may also be included.

A particular embodiment of dot for dot proofing is as follows.

In dot4dot block 100, the dots are filled out with the proper CMYK proofer values. Preferably ink drops will be set at the location of the dots as presented by the pseudo-binary or binary data 10 (screened data). The dot4dot block 100 in fact converts the proofer into the color behavior of the press; in a preferred embodiment, the gamut is limited to the press device and preferably as many parameters as possible, such as the color mixing, dot gain, color overlap, are the same as on the press.

Based on both the binary or pseudo-binary input data 10 and the contone data 20, the press colors are converted pixel by pixel to the colorant space of the proofer. It is preferred that different colorant values of the proofer are used to fill out different dot sizes. In this way, differences in dot gain between the press and the proofer may be taken into account.

The influence of dot gain on the "press to proofer conversion" may be shown as follows.

Suppose we have a 40 % patch in cyan on the press that we would like to match on the proofer in the dot4dot mode. Thus, proofer CMYK values are to be determined to fill out the 40% dot. To have a match, the following equations hold:

$$XYZ_{press} = (1 - \alpha - \beta)XYZ_{white-press} + (\alpha + \beta)XYZ_{solid-cyan-press}$$

$$= (1 - \alpha - \beta')XYZ_{white-proofer} + (\alpha + \beta')XYZ_{proofer}$$

with: $XYZ_{press}$ the XYZ values of the 40 % cyan patch on the press;

$XYZ_{white-press}$ the XYZ values of the paper on the press;

$XYZ_{solid-cyan-press}$ the XYZ values of the 100 % cyan patch on the press;

$XYZ_{white-proofer}$ the XYZ values of the paper of the proofer;

$XYZ_{proofer}$ the XYZ values of the dot at the proofer side so that a match is obtained; these values are to be determined;

$\alpha$ the dot size, i.e. 0.4 in our example;

$\beta$ the dot gain at the press side;

$\beta'$ the dot gain at the proofer side.

Under the assumption that the XYZ values of the paper on the press are the same as for the paper on the proofer, we have:

$$XYZ_{proofer} = \frac{(\beta'-\beta)}{(\alpha + \beta')} \, XYZ_{white} + \frac{(\alpha + \beta)}{(\alpha + \beta')} \, XYZ_{solid-cyan-press}$$

Suppose that the dot gain on the proofer is larger than the dot gain on the press, i.e. $\beta'>\beta$. As the $XYZ_{proofer}$ values are a linear combination between the $XYZ_{white}$ and the $XYZ_{solid-cyan-press}$, these values are less saturated. Hence, lower proofer colorant values are required to fill out a dot compared to the simulation of the solid cyan patch.

If the proofer has the same dot gain as the press, $\beta = \beta'$ and hence $XYX_{proofer} = XYZ_{solid-cyan-press}$. This means that there will be no effect of the dot size on the colorant values of the proofer to fill out the dots; i.e. the same colorant values of the proofer are used to simulate the dots of the 1-ink processes.

If the dot gain on the proofer is smaller than the dot gain on the press, i.e. $\beta'<\beta$, larger proofer colorant values are required to fill out a dot compared to the simulation of the solid cyan patch (opposite situation as in $\beta'>\beta$).

Calculations of the colorant values of the proofer to simulate a screened 1-ink process for cyan as printed on a press showed a significant reduction of the proofer colorant values when the cyan press value is reduced.

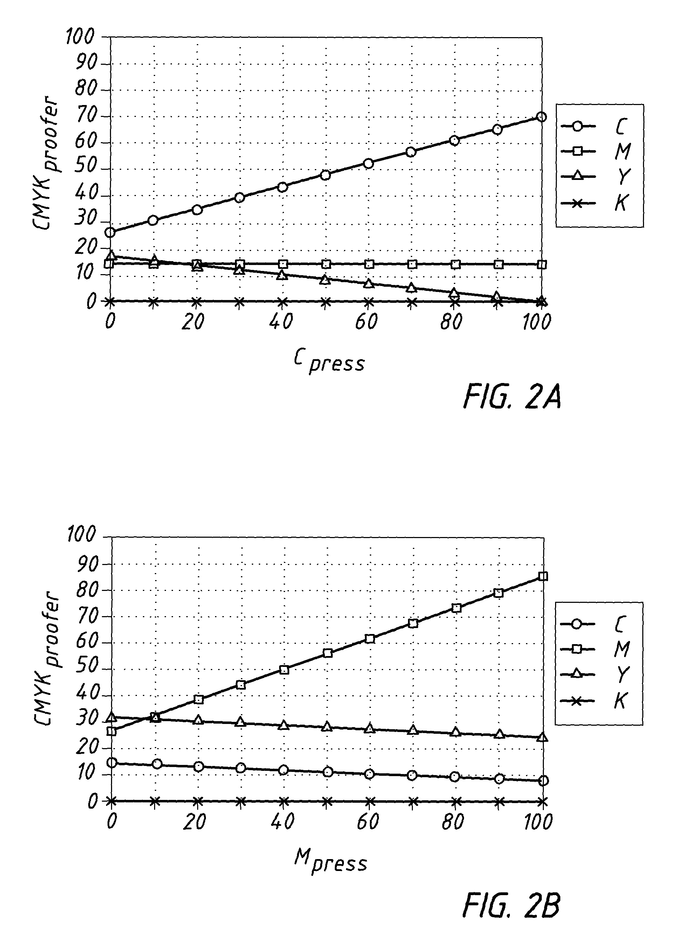

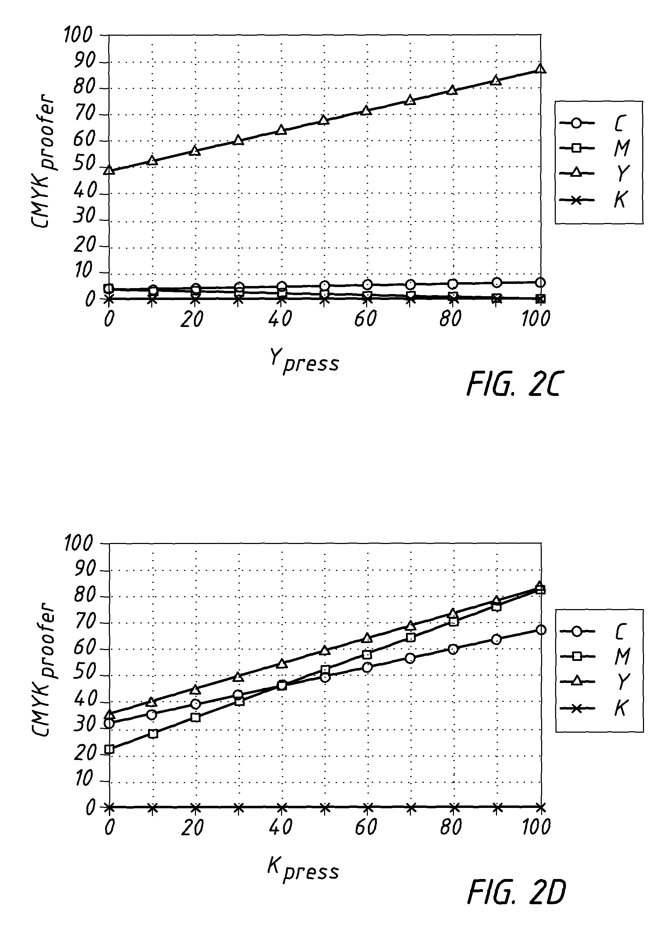

In Fig. 2A to 2D, the CMYK proofer values are given for the CMYK 1-ink processes of the press for a specific embodiment.

Determining the proofer colorant values to fill out the dots is preferably done as follows.

As in general the dot gain on the press and on the proofer are not the same, the proofer colorant values to fill out the dots are dependent on the press colorant values (see also the example of the 40% cyan patch on the press above). Based on the contone press values, the proofer colorant values may be determined for ink overlaps on the press. If the press is a binary printing device and is using n colorants, there are 2^n possible ink overlaps on the press (e.g. sixteen ink overlaps in case of CMYK press colorants). A proofer colorant combination will correspond to each of these 2^n ink overlaps. The contone press data indicates which of these proofer colorant combinations are to be used. Take for example CMYK press colorants, and a patch on the press of 50% cyan and 50% yellow. In this case, the inks may overlap as follows: cyan; yellow; cyan + yellow; white (i.e. no ink). In general, the binary or pseudo-binary data are used to pick out the proper proofer colorant combination to fill out a given pixel. In case of pure binary data, just one of the 2^n combinations suffices. In case of pseudo-binary data, these data are used to interpolate between the 2^n colorant combinations.

In case of a CMYK proofer and a CMYK press, for every CMYK press value, 16 CMYK proofer values will be used to simulate the color in the dot4dot mode. The pseudo-binary data is used to interpolate between these 16 CMYK combinations.

The 2^n colorant combinations may be obtained by using a model that predicts these values. Another possibility is to create a dedicated color table. Such a color table is called a press simulation link or shortly a simulation link in this document.

Such a simulation link converts the contone data of the press to 2^n colorant combinations of the proofer. The simulation link is a table defined in the colorant space of the press. It has a regular sampling along the colorant axes of the press colorant space. For press colorant combinations in between the sampling points, interpolation techniques may be used to obtain the proper 2^n proofer colorant combinations.

Preferably, the simulation link is created by a technique that is called closed loop characterization in this document.

**Closed loop characterization**

First, the case wherein the press is a 1-ink process is examined; further below, the more general case is discussed wherein the colorant space of the press is n-dimensional.

If the press is a 1-ink process, the simulation link will convert the dot percentages for the colorant of the press to two proofer colorant combinations, i.e. one to represent the white and one to represent the press colorant. The CMYK-values to simulate white are preferably always the same. Those for the colorant will change in function of the press colorant percentage.

Now, proofer colorant values have to be selected that give an accurate match with the press. To find out these values for a given dot percentage, a printer target may be created that includes patches of the given dot percentage filled out with a number of proofer colorant values. Based on a conventional characterization approach (as disclosed in **EP-A-1 083 739**, mentioned already above), the proofer colorant values can be calculated to match the given dot percentage of the press.

The problem with this approach is that quite a lot of color patches have to be printed and measured for each dot percentage of the press. To reduce this amount of patches, a first order approximation may be made. This approximation may be based on several assumptions such as e.g.:

- taking equal dot gains for the press and the proofer, so that the proofer colorant values are independent of the dot percentage of the press;
- taking into account the dot gain of the proofer and the press while calculating the $XYZ_{proofer}$ values for the dots and making a color separation based on the characterization of the proofer for the ED mode.

As such a first order approximation is likely to be inaccurate, it is preferred to correct the approximation. This may be done as follows. A small number of patches, preferably as little as possible, are printed per press colorant combination. These patches are measured so that a local model around the first solution can be constructed and new values can be calculated. If the aim color values of the press are outside the local model, the color is preferably mapped onto the gamut boundary of the local model.

Preferably, this approach is then iterated per color until the aim color values are reached within a predefined color tolerance, e.g. $\Delta E^*_{ab} = 1$ (the average deltaE in CIELAB space, see also further below).

In one embodiment, for a m-ink proofer process, (m+1) color patches for the given press dot percentage are printed. These patches are filled out with the original proofer colorant values plus a number of colorant differences in proofer colorant space. The colorant values of the (m+1) patches are located around the previous proofer colorant combination for the given dot percentage, so that they constitute a volume in the m-dimensional colorant space of the proofer. Hence, a model can be made that predicts the color behavior around the previous proofer colorant combination for the given dot percentage.

That the (m+1) colorant values are located "around" the previous proofer colorant combination in colorant space means that they are taken close enough in colorant space to that combination, so that a local linearization gives a good approximation, i.e. the model that is made may be linear and still give an accurate result. The same criterion holds for a point taken "around" another point in other embodiments disclosed in this document: one point is around another one in a colorant space, if a local linearization gives an accurate result (e.g. for calculation of CIE lightness differences, the change in lightness is proportional to the change in colorant values).

The previous proofer colorant combination may also be checked, by also printing a patch for this combination, i.e. by printing (m+2) patches per dot percentage of the press. This point in colorant space, i.e. the previous proofer colorant combination, may also be used to create one or more local printer models; preferably these local printer models all have the (m+2) patches in common. If for example linear models are used, (m+1) models may be created, resulting in an improved color model.

In this way, per iteration a minimum number of patches are printed. It is preferred to apply several iterations. Even in case of several iterations, the total number of printed patches will normally be much lower when compared to printing all possible combinations of proofer colorant values (regular grid in proofer colorant space) with which the press dot percentage has to be filled out.

This approach may be applied for a limited number of dot percentages of the press. If proofer colorant combinations are needed for inbetween dot percentages, interpolation techniques may be used. To improve the accuracy of the interpolation, the proofer colorant values for the 0 % patch are preferably be the same as the nearest patch in the 1-dimensional press colorant space.

Example

Now, an example of this approach is given wherein the colorant space of the proofer is a CMYK space. The press space is still considered to be 1-dimensional: only the cyan ink is used. Based on the proofer profile for the ED mode, the 100 % cyan patch is matched with the CMYK cyan proofer values. These values will be used to match any given dot percentage of press cyan, let us suppose to match alfa % of press cyan.

To be able to build a local printer model around this solution, a number of colorant combinations are needed upon which a volume can be constructed in the CMYK colorant space. In a 4-dimensional space, the minimum number of patches needed are 5 with which a pentahedron can be constructed. These 5 points, called a, b, c, d and e, can be selected as follows:

$$a\left(-d, -\frac{d}{\sqrt{3}}, -\frac{d}{\sqrt{6}}, -\frac{d}{\sqrt{10}}\right)$$

$$b\left(d, -\frac{d}{\sqrt{3}}, -\frac{d}{\sqrt{6}}, -\frac{d}{\sqrt{10}}\right)$$

$$c\left(0, -\frac{2d}{\sqrt{3}}, -\frac{d}{\sqrt{6}}, -\frac{d}{\sqrt{10}}\right)$$

$$d\left(0, 0, -\sqrt{\frac{3}{2}}d, -\frac{d}{\sqrt{10}}\right)$$

$$e\left(0, 0, 0, \frac{4d}{\sqrt{10}}\right)$$

with (0, 0, 0, 0) as the central point, i.e. the given solution (called the previous proofer colorant combination in the general discussion above). Here 2d corresponds to the difference between any two of the five points. The distance of each of the five points to the central point is

$$\frac{4d}{\sqrt{10}}.$$

.

A model is based either on the 5 points a, b, c, d, and e, or on these five points and the central point. In the first case, only one model can be made. In the second case, 5 localized models can be made that are continuous at common boundaries.

As model each time a linear relationship between color values and colorant values is taken, i.e. for the points a, b, c, d, and e:

$$\begin{pmatrix} X \\ Y \\ Z \end{pmatrix} = \begin{pmatrix} X_b - X_a & X_c - X_a & X_d - X_a & X_e - X_a \\ Y_b - Y_a & Y_c - Y_a & Y_d - Y_a & Y_e - Y_a \\ Z_b - Z_a & Z_c - Z_a & Z_d - Z_a & Z_e - Z_a \end{pmatrix} \begin{pmatrix} \Delta C_{ab} \\ \Delta C_{ac} \\ \Delta C_{ad} \\ \Delta C_{ae} \end{pmatrix} + \begin{pmatrix} X_a \\ Y_a \\ Z_a \end{pmatrix}$$

with $\Delta C_{ab} + \Delta C_{ac} + \Delta C_{ad} + \Delta C_{ae} = 2d$

XYZa, ..., XYZe the XYZ measurement of patch a, ..., e.

$\Delta C_{ab}, ..., \Delta C_{ae}$ the colorant distance from point a in the direction of b, ...., e.

Normally, $\Delta C_{ab} + DC_{ac} + \Delta C_{ad} + \Delta C_{ae} = 2d$. However, in some cases the colorant distance from the point a to one of the other points may be outside the colorant gamut. Suppose this happens for point b. Assume that the CMYK proofer values are (93, 20, 14, 0) and $\Delta C_{ab}$= (11, 5, 2, 0). Obviously, the CMYK proofer values of point b (104, 25, 16, 0) are outside the colorant gamut. Therefore, $\Delta C_{ab}$ is modified into (7, 5, 2, 0). As a consequence, the corresponding sum $\Delta C_{ab} + \Delta C_{ac} + \Delta C_{ad} + \Delta C_{ae}$ will be smaller than 2d in the direction of point b.

The gamut boundary needed for the gamut mapping is defined by the faces of the pentahedron. A face of the pentahedron is defined by 4 out of the 5 points; i.e. there are 5 faces. The convex hull of the faces transformed to color space defines the gamut. This gamut is used for the gamut mapping.

If also the central point is taken into account, 5 linear models are made with the central point as the a point. These linear models have faces in common, however due to the linear approach the five models are continuous. Also in this case, the convex hull of the transformation of the faces of all linear models results in the gamut.

In the more general case, the colorant space of the press is n-dimensional.

If the colorant space of the press is n-dimensional, and the colorant space of the proofer is m-dimensional, the simulation link may be created for a regular sampling in the press colorant space. If per colorant axis of the press colorant space k values are taken, in total k^m x (m+2) patches will be printed per iteration.

To change the color for overlaps of inks of the press, all 2^n proofer colorant combinations may be modified with the same colorant amounts. Also in this case it might happen that some colorant changes cannot be applied as the new colorant values are outside the colorant gamut. Also in this case the colorant changes may then be clipped to the gamut boundary of the colorant cube of the proofer. In the case of the overlap between multiple inks, it is possible that for one of the overlaps no colorant reduction has to be applied but for another overlap one of the colorants has to be clipped.

If m = n = 4, and k = 4, the dot4dot target includes 256 x 6 = 1536 patches.

An advantage of this technique is that special colors such as neutrals (for which a* and b* are zero in CIELAB space) and skin colors, as well as user defined colors may be added to the target. Per color, the iteration may be stopped according to a different criterion.

To reduce the number of iterations, it is preferred that the size of the volume spanned by the (m+2) colors is reduced as the deltaE between the aim value and the current approach decreases.

In a similar way as with the colorimetric rendering intent as defined in the ICC profile specification, the relative colorimetric table can be converted into the absolute colorimetric table, the simulation link created for the relative colorimetric intent can be converted into a simulation link for the absolute intent.


**Workflow for closed loop characterization, according to one embodiment of the invention**


Setup steps:

    1. Select a screen and press profile (n-ink process)
    2. Print an IT873 target in ED mode without CMS and create a proofer profile
    3. Screen a dedicated dot4dot target and process the target in the dot4dot flow without simulation link. Retrieve the screened dot4dot target after the dot4dot block.
    4. Fill out the proofer colorant values in the screened dot4dot target based on the 2^n possible overlaps of the press inks (n in total) by making a link between the press profile and the proofer profile (start iteration).


Iterate over the following steps:

    5. Print the screened dot4dot target transformed to proofer colorant values in the ED mode and measure the matches (spectrally).
    6. Based on the previous measurements, the press profile and the proofer profile, the closed loop characterization will generate

        a. per patch of the dot4dot target

            i. the deltaE for the previous simulation link
            ii. indication if a match is obtained for the new simulation link
            iii. indication if the color is out gamut for the proofer

iv. a step in CMYK proofer space

b. the new simulation link
c. a new screened dot4dot target in proofer CMYK space

7. Check if the closed loop characterization results in a proper match for the patches of the dot4dot target. If no, go to step 4, it yes stop and use the new simulation link for the selected screen and output profile.

The check is based on the deltaE's of the patches in the dot4dot target. Different criteria can be used here such as a criterion on

- the average deltaE;
- the maximum deltaE of the in gamut colors .

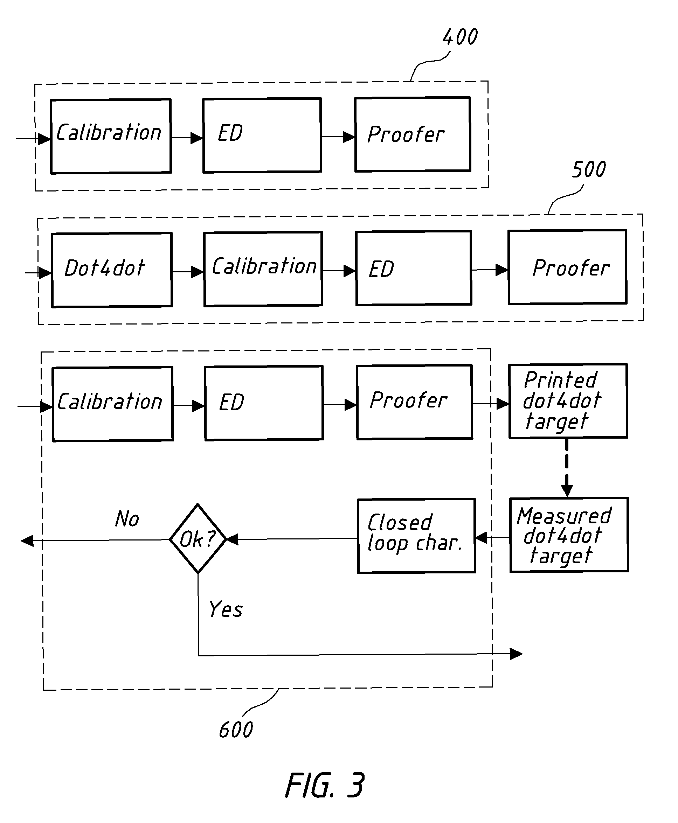

In Fig. 3, the ED mode is represented by diagram 400, the dot4dot mode by diagram 500 and the closed loop characterization flow by diagram 600. One closed loop characterization step, without iteration, is represented by the box "Closed loop char." in diagram 600.

In one embodiment of the closed loop characterization flow, the following steps are performed:

1. sending a printer target in ED mode to the rip
2. creation of a proofer profile based on the printer target
3. selection of a screen
4. generation of a screened dot4dot target. This target may be fixed, or a number of critical colors and/or user preferred colors may be added.
5. selection of a press profile
6. filling out the screened target with proofer colorant values defined by a link between the press profile and proofer profile
7. sending the screened dot4dot target in proofer colorant space in ED mode
8. creation of the simulation link and info data based on the measured dot4dot target, the press profile and proofer profile.
9. display the accuracy of the match in a proper way (deltaE per patch of the dot4dot target)
10. prompting the user to go on or not

The closed loop characterization may be applied for any n-ink process. Typically we think about a duotone or a non-conventional 4-ink process. It is assumed that this n-ink process will be characterized by a proper press profile.

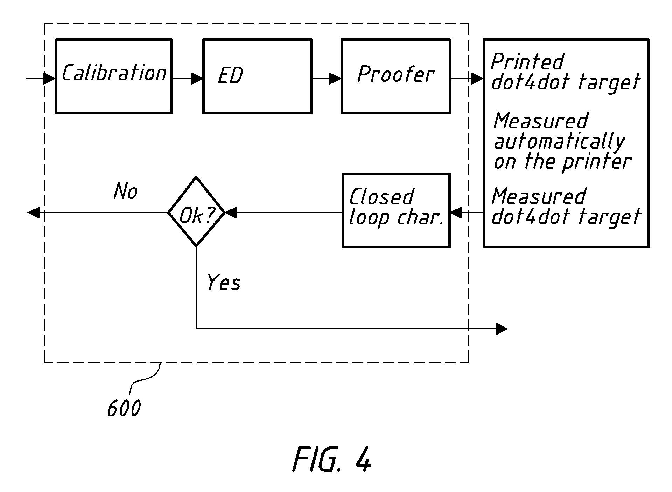

A disadvantage of the flow 600 as discussed hereinbefore and shown in Fig. 3 is that per iteration the dot4dot target has to be measured via manual interactions. If a colorimeter and preferably a spectrophotometer is installed on the proofer, the closed loop characterization flow can be applied automatically. This is advantageous since the simulation table is made for a given screen and press profile. If for example the press profile changes, the whole characterization will normally have to be repeated. Instead of being installed on the proofer, the measurement device may simply be coupled mechanically to the printing device, as disclosed in patent application **EP-A-1 351 483**. See also Fig. 4.

To render spot colors such as Pantones, it is advantageous that measurement files are available based on a number of dot percentages. As an example, consider a dot percentage every 10 %, i.e. for 10, 20, 30, 40, 50, 60, 70, 80, 90 and 100 %, the dots are filled out with a regular number of proofer colorant values. These targets may be measured and stored in the profile (e.g. in a private tag of the ICC profile) based on the 100 % measurement files, i. e. the ED mode. These measurement files are called the tint measurements in this document.

As printing with a spot color corresponds to a 1-ink process, per dot percentage of the spot color the color values can be predicted based on a printer model for 1-ink processes. Based on the dot percentage of the spot color and the predicted color value, the corresponding tint measurement or, if there is no matching tint measurement available, the neighboring tint measurements are taken to determine the proofing colorant values for the given dot percentage. If the dot percentage of the spot color is smaller than the lowest available tint measurement, the measurement file of the lowest available tint measurement is used. These proofing colorant values can be easily determined based on a conventional characterization for the given tint measurements.

In this way, spot colors rendered in the dot4dot mode can be rendered the same as the spot color rendering in the ED mode; i.e. the spot color rendering in dot4dot mode matches the spot color rendering in ED mode without having to create dedicated simulation links for the spot colors.

An even easier approach, wherein significantly less patches have to be measured, is based on the dot gain modeling explained hereinbefore. Here only dot gain information is needed to render spot colors in the dot4dot mode.

In general it is assumed that the dot percentage corresponds to the read dot size of the dot. If this is not the case, curves may be applied to map the dot percentage into the dot size and vice versa.

Now, some other embodiments are discussed wherein the closed loop characterization technique is applied. The closed loop characterization may be applied once to modify a link or transformation; it may also be applied iteratively.

**Extension of the closed loop characterization technique to conventional links**

Links from device dependent spaces to device dependent spaces

If data has to be exchanged between two or multiple color reproduction devices, a link is created based on the profiles of the devices. Such a mechanism is described and supported by the International Color Consortium, ICC.

In this document, instead of the term "link", the term "transformation" is also used, meaning a relation between a first device dependent or device independent space (in general referred to as source space) and a second device dependent or device independent space (in general referred to as destination space).

The largest disadvantage of the linking mechanism is that an exchange space is used to create a link. For a CMYK-CMYK link for example, it is difficult to keep pure colors pure, e.g. to map pure yellow on pure yellow. Also the accuracy might be reduced for some colorant combinations.

Hence, to improve the accuracy of the link, also a closed loop characterization can be used.

In this section it is assumed that the link is based on the concatenation between a first and second color reproduction device (i.e. the link is from the first to the second color reproduction device). If a link consists of the concatenation between multiple devices, the following approach can be easily extended for these links. We also assume that both colorant spaces are CMYK spaces, but all following techniques can be easily extended to other colorant spaces.

Typically, first of all, the accuracy of the link is checked by reproducing a number of color patches and measuring them. These patches can be a default set of patches, possibly extended with critical colors such as neutrals and skin tones and/or user defined patches. The difference between the measurements and the aim values indicate the accuracy of the link over the colorant space of the first color reproduction device.

If there are some patches for which the link results in a bad color reproduction, there might be several reasons for this such as:

- the color is out gamut
- the gamut mapping imposes a certain color deviation in favor of other color characteristics
- some editing has been applied to the profile
- lack of accuracy of the forward table of the first reproduction device
- lack of accuracy of the inverse table of the second reproduction device
- insufficient sampling points for the link

In proofing however, it is always advantageous to map the colors as accurately as possible. In principle, in gamut colors are preferably mapped as accurately as possible, out gamut colors on the other hand are preferably mapped to the closest reproducible color at the gamut boundary. If the gamut of the proofer is too small for some colors, or if some wanted colors on the proofer side cannot be used, these colors may be mapped. However, if some out gamut colors are mapped, it is also desirable to map some in gamut colors to preserve continuous color shadings.

This means that the aim color values are preferably defined by the gamut mapping technique and to check a color separation table (color table from color space to colorant space) the color values resulting from the gamut mapping are then used as aim values. By preference these aim color values correspond as much as possible to the forward transformation of the profile of the first color reproduction device. Due to the gamut mapping, the aim color values are reproducible colors for the second color reproduction device.

Color patches used to check a link are preferably divided into two sets, color patches belonging to the grid of the link and color patches in between grid points of the link.

If the color difference for the second set is too large, additional sampling points are preferably taken for the link. For the first set however, the accuracy can only be increased by changing the target colorant values; i.e. the corresponding colorant values of the second reproduction device for the given colorant values of the first reproduction device.

If the accuracy of a link is known compared to the proper aim values, it is possible to improve the link with the closed loop characterization for the grid points of the link. Other patches may also be improved, but this is not really required.

Suppose that CMYK1 is a grid point of the link with target colorant values CMYK2 and that the CMYK2 values result is a rather poor match for the specified CMYK1 values.

Therefore, around the CMYK2 colorant combination, several CMYK combinations may be taken to span a small volume in the colorant space of the second color reproduction device. In general for a m-dimensional colorant space for the second color reproduction device, (m+1) colorant combinations will be printed and measured. If one also wishes to check the accuracy for the CMYK2 patch, an additional patch may be printed. For a CMYK space for the second color reproduction device this means that 6 patches will be printed to be able to improve the link for the given CMYK1 combination.

If however already some color patches are known, e.g. due to the availability of the measurement file of the printer target for the second color reproduction device, less patches may be printed. In the limit at least one patch will be printed as otherwise the printer model was not made properly (i.e. the available measurements were not used properly to create color tables).

Based on the 5 measurements, a local model can be constructed around the CMYK2 patch. If 6 measurements are available, 5 local models can be made that are continuous at the common boundaries.

If 5 points are given, i.e. points a, b, c, d, and e, as model the flowing linear model can be used:

$$\begin{pmatrix} X \\ Y \\ Z \end{pmatrix} = \begin{pmatrix} X_b - X_a & X_c - X_a & X_d - X_a & X_e - X_a \\ Y_b - Y_a & Y_c - Y_a & Y_d - Y_a & Y_e - Y_a \\ Z_b - Z_a & Z_c - Z_a & Z_d - Z_a & Z_e - Z_a \end{pmatrix} \begin{pmatrix} \Delta C_{ab} \\ \Delta C_{ac} \\ \Delta C_{ad} \\ \Delta C_{ae} \end{pmatrix} + \begin{pmatrix} X_a \\ Y_a \\ Z_a \end{pmatrix}$$

with XYZa, ..., XYZe the XYZ measurement of patch a, ..., e.

$\Delta C_{ab},...,\Delta C_{ae}$ the colorant distance from point a in the direction of b, ... ., e.

XYZ the aim color values

Suppose that $(\Delta C_{ab},\Delta C_{ac},\Delta C_{ad},\Delta C_{ae},)$ results in the best match for the aim values XYZ, the new target values CMYK2' for the link at grid point CMYK1 are

$$C'_2 = C_2 + \Delta C$$

$$M'_2 = M_2 + \Delta M$$

$$Y'_2 = Y_2 + \Delta Y$$

$$K'_2 = K_2 + \Delta K$$

with $(\Delta C,\Delta M,\Delta Y,\Delta K)$ the same colorant change as

$(\Delta C_{ab},\Delta C_{ac},\Delta C_{ad},\Delta C_{ae},)$ but along the conventional CMYK axes.

$(C_2,M_2,Y_2,K_2)$ the CMYK2 values

$(C'_2,M'_2,Y'_2,K'_2)$ the new CMYK2' target values

As only one set of colorant values have to be adapted, the modeling is significantly easier compared to the dot4dot closed loop characterization.

In a similar way, the technique can be extended to links between other device dependent space such as RGB, gray, CMYK, CMYKOG (i.e. CMYK, Orange, Green) and other n-ink processes. Also the device dependent space of the source and destination does not have to be the same.

Links from device independent spaces to device dependent spaces

In a number of cases links are made from CIELAB or another device independent space to a device dependent space. Such transformations are also used in ICC profiles as color tables identifying the relation between a color specified in LAB values and the corresponding colorant values to reproduce this color.

As in a color table only for a number of points the relation is given between the device independent values, i.e. the color values, and the device dependent values, i.e. the colorant values, interpolation techniques may be used to get the relation for color values in between the color values of the table.

In a similar way as explained before, closed loop characterization can be applied on a table from a device independent space to a device dependent space. The only difference is that the aim values are given. In the previous technique, i.e. the closed loop characterization for the link from a device dependent to a device dependent space, device dependent values were given that had to be evaluated to get corresponding device independent color values, typically CIELAB values.

Preferably, closed loop characterization is applied here for a number of LAB values at the boundary of the gamut of the destination device and for neutrals and near neutrals, as for these colors the largest deviations may occur when creating a conventional link based on the concatenation of color tables.

Other embodiments of closed loop characterization

It is well known to those knowledgeable in the field that other ways to construct a local printer model can be based on printing a number of color patches in which the patches are not defined as a CMYK difference in destination space but in the source space, and then applying the link to these colorant values.

In another embodiment, the CMYK difference, either in the source space or the destination space, may depend on a number of characteristics such as the color in source space that is being improved or the deltaE between the current destination values (corresponding colorant values in the destination space for the given source color values that are forward evaluated to a device independent color space as predicted by a printer model or forward color table) and the aim values (forward evaluation as predicted by the printer model or the forward color table of the source color values to device independent color values if needed).

In yet another embodiment, the colors on which the local printer model is based include:

- a number (which may be zero) of colors printed to create the profile for the given output device;
- a number (which may be zero) of colors printed in one of the previous iterations; and
- a number (which may be zero) of colors printed for the current iteration.

Also the way in which an improved colorant combination is found, which is typically needed for CMYK processes, may depend on a number of characteristics such as the original K value, total amount of ink, relations between the new colorant values and relations between the new and old colorant values.

Typically if the K value is fixed for a CMYK destination space, only a local 3-ink CMY printer model has to be created. In this case, less color patches are needed so that less patches have to be measured.

The whole system can be made automatic, if a measurement device is mounted on a printer system. Hence no manual interactions are needed anymore.

To control the environment, it is also advantageous to measure environment characteristics such as the temperature and humidity. Based on these values, it can be checked if measurements taken at a different time can be used together.

Those skilled in the art will appreciate that numerous modifications and variations may be made to the embodiments disclosed above without departing from the scope of the present invention.

**Claims**

1. A method for modifying a transformation from a first space to a second device dependent colorant space of a second color reproduction device, wherein said first space is selected from the group of a first device dependent colorant space of a first color reproduction device and a first device independent color space, the method comprising the steps of:

   - selecting a first point in said first space;
   - applying said transformation to said first point, thus obtaining a target value in said second device dependent colorant space;
   - correcting said target value, thus modifying said transformation, wherein said correction of said target value is based on a measured value of a color patch, reproduced on said second color reproduction device for a second point in said second device dependent colorant space, wherein said second point is selected from the group of (i) a point around said target value and different from said target value and (ii) said target value.

**2.** The method according to claim 1 wherein said second point is around said target value and different from said target value.

**3.** The method according to claim 1 or claim 2 further comprising the step of using said second point and said measured value in constructing a local model of said second color reproduction device around said target value.

**4.** The method according to any one of claims 1 to 3 further comprising the step of using said transformation in making a dot for dot proof.

**5.** A computer program comprising computer program code means adapted to perform the steps of the method according to any one of claims 1 to 4 when said program is run on a computer.

**6.** A computer readable medium comprising program code adapted to carry out the method according to any one of claims 1 to 4 when run on a computer.

**7.** A system comprising means for carrying out the steps of the method according to any one of claims 1 to 4.

**8.** The method according to any one of claims 1 to 4 wherein said second color reproduction device is a computer display.

**9.** The method according to any one of claims 1 to 4 wherein said second color reproduction device is an inkjet proofing device.

**10.** The method according to claim 9 further comprising the steps of:

- printing said color patch on said ink jet proofing device; and
- measuring said value of said color patch on a measurement device that is mechanically coupled to said ink jet proofing device.

*500*

*10*

*30*

| Dot4dot | Calibration | Error diffusion |

*20*

*100*

*110*

*120*

*FIG. 1*

FIG. 2A

FIG. 2B

FIG. 2C

FIG. 2D

FIG. 3

FIG. 4